# EUROPEAN PATENT APPLICATION

(11) **EP 4 563 973 A1**
(43) Date of publication of application: **04.06.2025**
(21) Application number: 23846600.7
(22) Date of filing: 27.07.2023
(51) Int. Cl.: G01N 19/04

(54) **INTERFACE FAILURE RATE MEASUREMENT DEVICE AND INTERFACE FAILURE RATE MEASUREMENT METHOD**

(30) Priority: 28.07.2022 JP 2022120200
(71) Applicant: National Institute for Materials Science, Tsukuba-shi, Ibaraki 305-0047 (JP)
(72) Inventor: SATO Chiaki, Tokyo 152-8550 (JP); MATSUO Goh, Tokyo 152-8550 (JP); KAKEI Yushin, Tokyo 152-8550 (JP); SEKIGUCHI Yu, Tokyo 152-8550 (JP); NAITO Masanobu, Tsukuba-shi, Ibaraki 305-0047 (JP)
(74) Representative: Oak & Fox
(86) International application number: PCT/JP2023/027482
(87) International publication number: WO 2024/024870

(57) **Abstract**

To provide an interfacial fracture rate measurement apparatus and an interfacial fracture rate measurement method that measure an interfacial fracture rate with high accuracy.

An interfacial fracture rate measurement apparatus (100) includes: a light source unit (50) configured to irradiate an adhesive fracture surface (40) with light (51); an image capturing unit (60) configured to capture an image of adhesive residue (31) on the adhesive fracture surface (40); and image processing means (70) for determining a site of an interfacial fracture from a captured image and calculating an area ratio of the site.

## Description

### Technical Field

The present invention relates to an interfacial fracture rate measurement apparatus and an interfacial fracture rate measurement method.

### Background Art

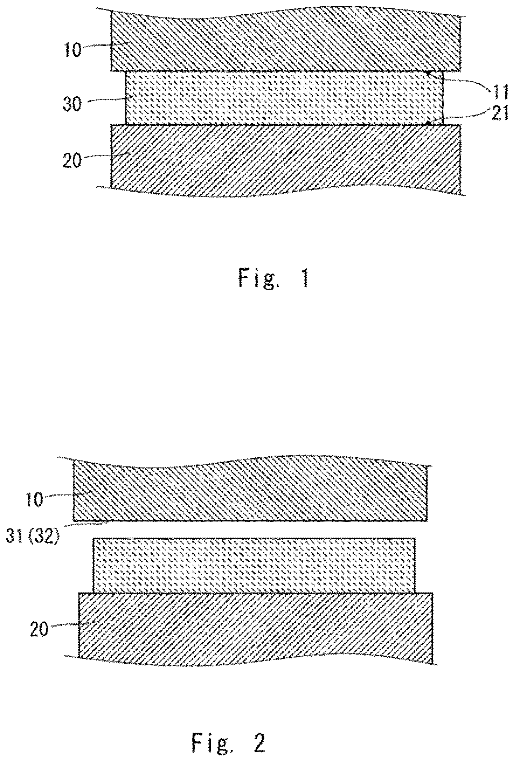

Adhesives are widely used to bond objects to each other. Fig. 1 shows an example of an adhered part that uses an adhesive. In the example shown in Fig. 1, an interface 11 of a first adherend 10 and an interface 21 of a second adherend 20 are bonded to each other by chemical and physical forces via an adhesion layer 30.

A method involving applying an external force to an adhered part to fracture the adhered part and observing a fracture surface is known as a method of evaluating adhesion. Morphology of the fracture surface includes an interfacial fracture 32 (refer to Fig. 2) in which an adhesive layer is peeled off from an interface of one adherend, a cohesive fracture 33 (refer to Fig. 3) in which the adhesive layer is fractured, and a thin-layer cohesive fracture 34 in which a cohesive fracture occurs near the interface of one adherend (refer to Fig. 4). Usually, a fracture surface is a mixture of an interfacial fracture, a cohesive fracture, and a thin-layer cohesive fracture. As an example of an evaluation criterion, adhesion is evaluated to be of high quality with little variation in adhesive strength if the interfacial fracture rate is 40% or lower.

For example, Patent Literature 1 discloses an inspection method of a bonded substrate including: cutting out a first chip including a test pattern from a bonded substrate constituted of a first substrate and a second substrate; separating the first chip and checking a fracture state; and evaluating a bonding state of a second chip in a region other than the test pattern of the bonded substrate. In Patent Literature 1, it is described that a bonded surface of the first chip is observed with an optical microscope (for example, paragraph 0049).

### Citation List

### Patent Literature

[Patent Literature 1] Japanese Unexamined Patent Application Publication No. 2018-059736

### Summary of Invention

### Technical Problem

As described in Patent Literature 1 and the like, currently, a fracture surface is observed visually or under a microscope. With visual and microscopic observations, it may be particularly difficult to distinguish between an interfacial fracture and a thin-layer cohesive fracture. In addition, variability in determinations between observers cannot be ruled out. Therefore, there is a need to improve accuracy of determining a fracture state.

The present invention was made in consideration of the circumstances described above and an object of the invention is to provide an interfacial fracture rate measurement apparatus and an interfacial fracture rate measurement method that measure an interfacial fracture rate with high accuracy.

### Solution to Problem

An interfacial fracture rate measurement apparatus according to the present disclosure includes: a light source unit configured to irradiate an adhesive fracture surface with light; an image capturing unit configured to capture an image of adhesive residue on the adhesive fracture surface; and image processing means for determining a site of an interfacial fracture from a captured image and calculating an area ratio of the site.

In the interfacial fracture rate measurement apparatus described above, the light source unit may be a UV light source unit and the image capturing unit may be configured to capture fluorescence emitted by the adhesive residue.

In the interfacial fracture rate measurement apparatus described above, the light source unit may be a polarized light source unit and the image capturing unit may include a polarizing plate and may be configured to capture transmitted light that is transmitted through the adhesive residue.

An interfacial fracture rate measurement method according to the present disclosure includes the steps of: irradiating an adhesive fracture surface with UV light or polarized light; capturing fluorescence emitted by adhesive residue on the adhesive fracture surface or transmitted light that is transmitted through the adhesive residue; and determining a site of an interfacial fracture from an obtained image and calculating an area ratio of the site.

### Advantageous Effects of Invention

According to the present disclosure, an interfacial fracture rate measurement apparatus and an interfacial fracture rate measurement method that measure an interfacial fracture rate with high accuracy can be provided.

### Brief Description of Drawings

Fig. 1 is a schematic sectional view showing an example of an adhered part.
Fig. 2 is a schematic sectional view showing an example of an interfacial fracture.

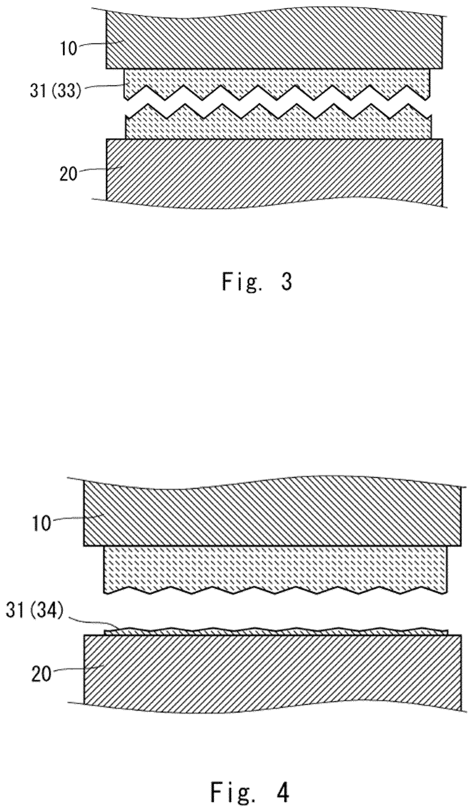

Fig. 3 is a schematic sectional view showing an example of a cohesive fracture.
Fig. 4 is a schematic sectional view showing an example of a thin-layer cohesive fracture.

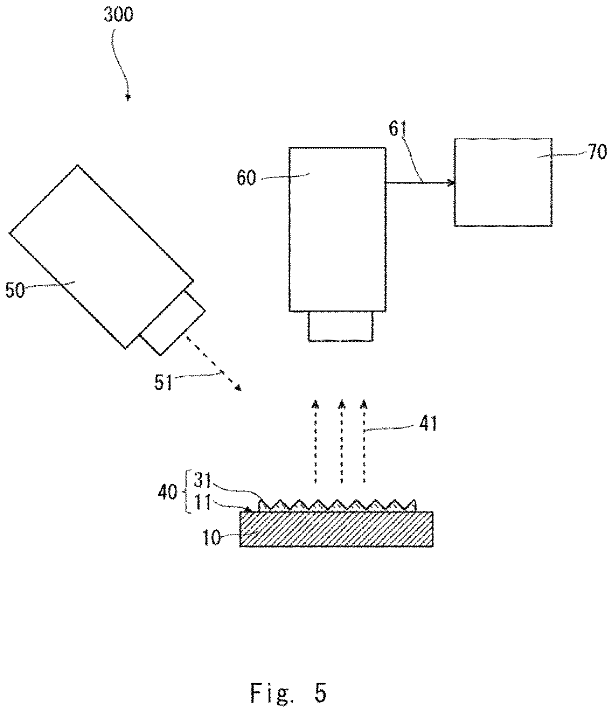

Fig. 5 is a schematic view showing an example of an interfacial fracture rate measurement apparatus.

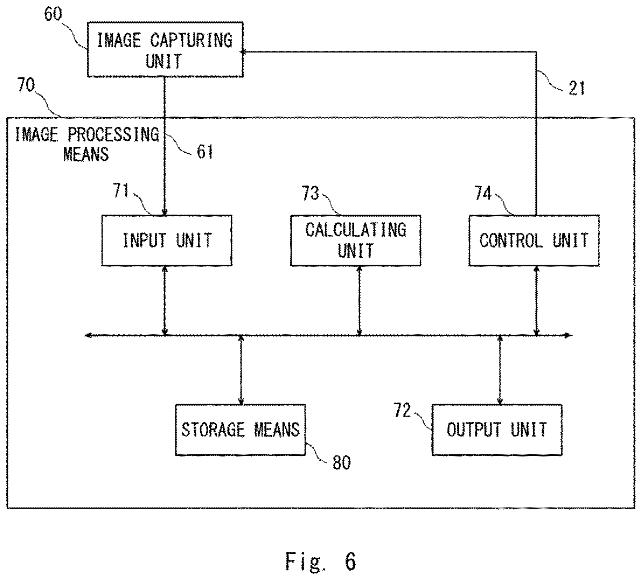

Fig. 6 is a block diagram showing an example of image processing means.

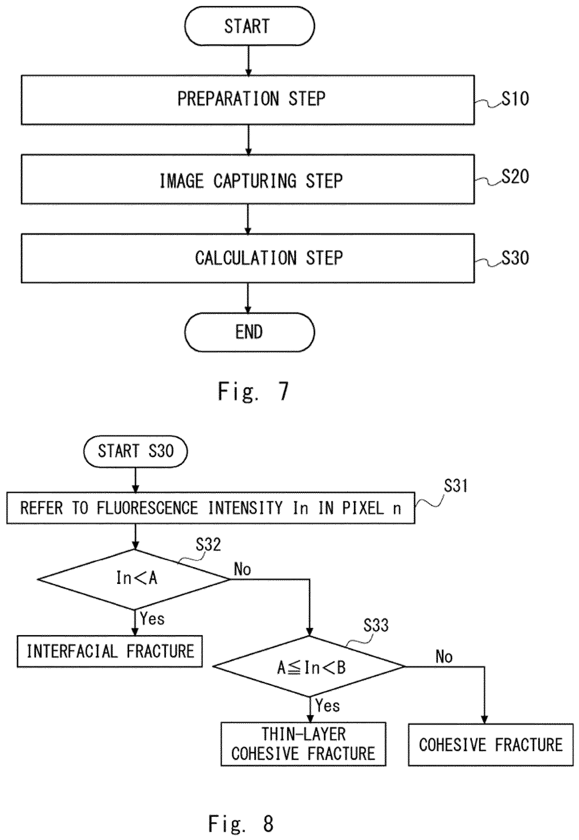

Fig. 7 is a flowchart showing an example of an interfacial fracture rate measurement method.
Fig. 8 is a flow chart showing an example of an area ratio calculation step according to a first embodiment.

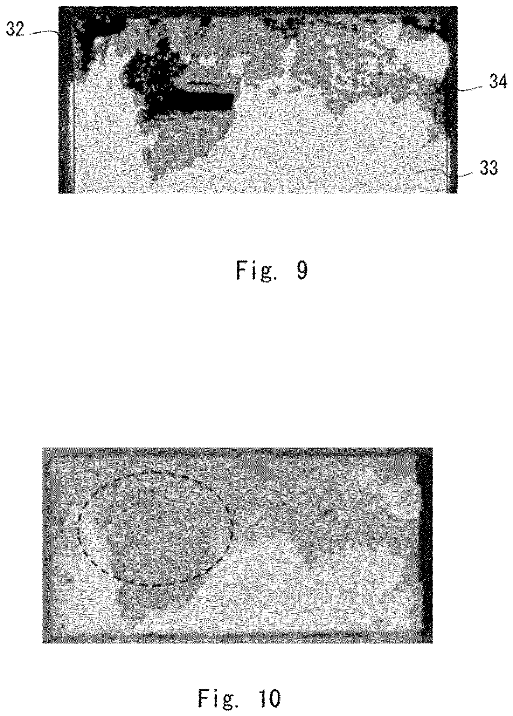

Fig. 9 is a photograph showing an image after image processing of an image of an adhesive fracture surface.
Fig. 10 is a photograph showing a visible light image of an adhesive fracture surface.

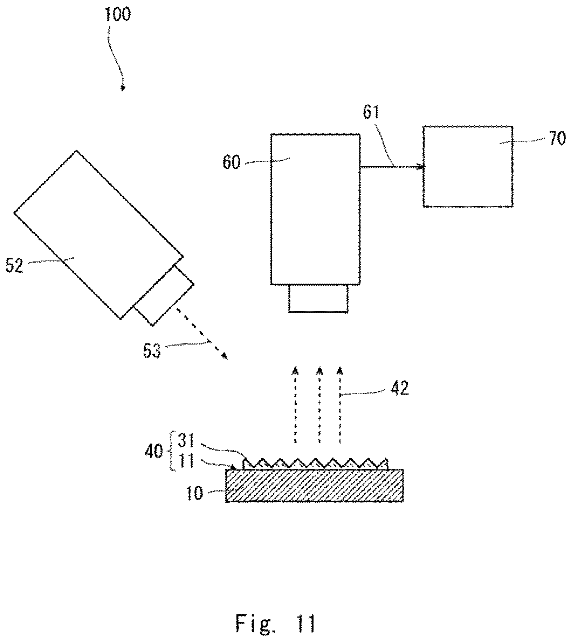

Fig. 11 is a schematic view showing an example of an interfacial fracture rate measurement apparatus according to the first embodiment.

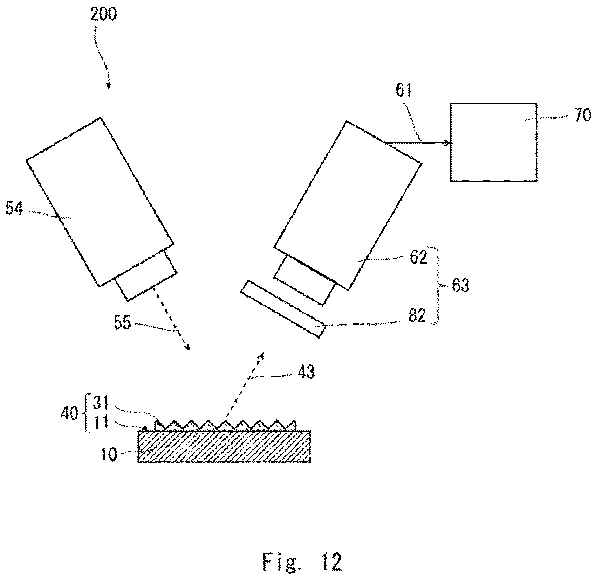

Fig. 12 is a schematic view showing an example of an interfacial fracture rate measurement apparatus according to a second embodiment.

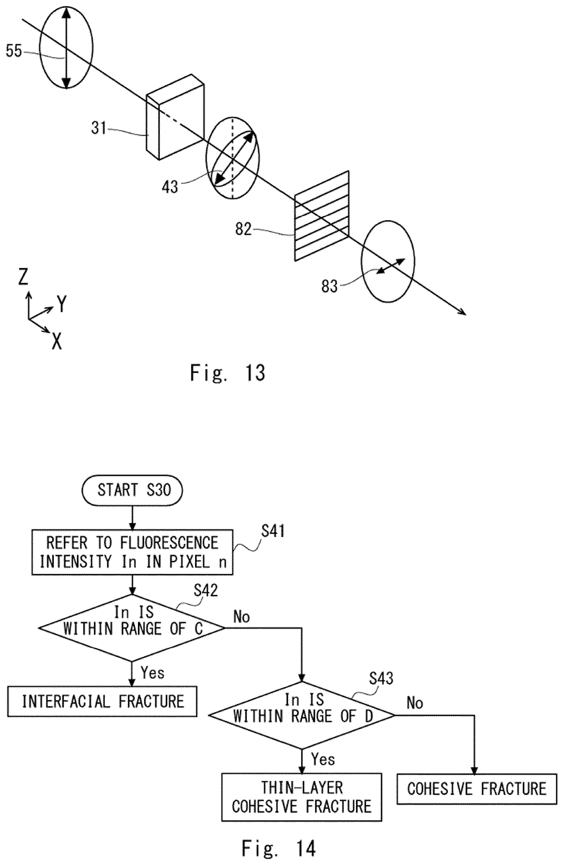

Fig. 13 is a schematic view for describing behavior of polarized light that is transmitted through adhesive residue.
Fig. 14 is a flow chart showing an example of an area ratio calculation step according to the second embodiment.

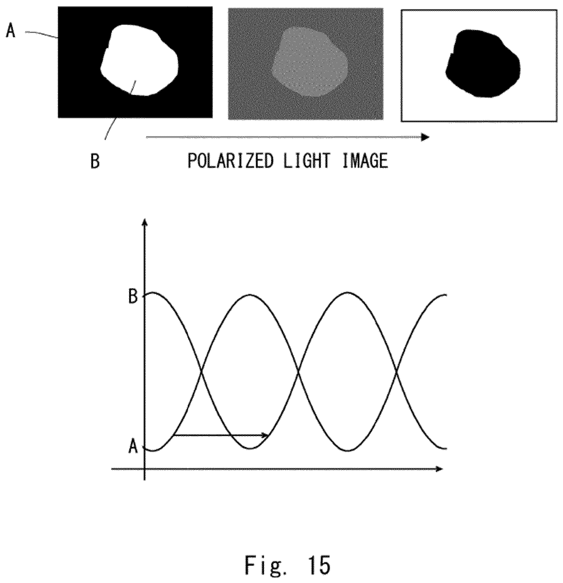

Fig. 15 is a schematic view for describing another example of the area ratio calculation step according to the second embodiment.

### Description of Embodiments

Hereinafter, while the present invention will be described through embodiments of the invention, the invention as set forth in the claims is not limited to the following embodiments. Furthermore, not all components described in the embodiments are essential as solutions to the problem.

For the sake of brevity, the following descriptions and the drawings have been simplified as appropriate. In addition, for descriptive purposes, each component in the drawings may vary greatly in scale. In the respective drawings, same or corresponding elements are denoted by same reference signs and, for the sake of brevity, repetitive descriptions will be omitted when appropriate.

In the present specification, when simply referring to "visible light" or "UV light", such light may be either polarized light or non-polarized light. In addition, when simply referring to "polarized light", a wavelength of the light is not particularly limited.

Furthermore, unless otherwise noted, "to" indicating a numerical range shall include a lower limit value and an upper limit value of the range.

### [Interfacial fracture rate measurement apparatus]

A configuration of an interfacial fracture rate measurement apparatus will be described with reference to Figs. 5 and 6. Fig. 5 is a schematic view showing an example of an interfacial fracture rate measurement apparatus 300. The interfacial fracture rate measurement apparatus 300 includes: a light source unit 50 configured to irradiate an adhesive fracture surface 40 with light 51; an image capturing unit 60 configured to capture light 41 emitted from adhesive residue 31 on the adhesive fracture surface 40; and image processing means 70 for determining a site of an interfacial fracture from a captured image 61 and calculating an area ratio of the site.

Fig. 6 is a block diagram showing an example of the image processing means 70. The image processing means 70 in the example shown in Fig. 6 includes an input unit 71, an output unit 72, a calculating unit 73, a control unit 74, and storage means 80. For example, a known personal computer, PDA, tablet terminal, or the like may be used as the image processing means 70.

The input unit 71 is input means for accepting input of various kinds of information and need only include at least means for capturing the image 61 (for example, a terminal that can be connected to the image capturing unit 60) and may include a keyboard, a touch panel, various kinds of switches, or the like as needed.

The output unit 72 is output means for outputting various kinds of necessary information and is configured as, for example, a monitor or the like.

The calculating unit 73 determines at least a site of an interfacial fracture from a captured image and calculates an area ratio of the site. A specific example of a calculation method will be described later. In addition, when a specific camera or the like to be described later is used to capture an image, image processing is to be performed by the calculating unit 73. Specifically, the calculating unit 73 is constituted of a CPU, various kinds of programs that are interpreted and executed on the CPU (including basic control programs such as an OS and application programs that run on the OS to realize specific functions), and an internal memory such as a RAM for storing programs and various kinds of data.

The storage means 80 is storage means for storing various kinds of information necessary for processing by the image processing means 70 and is constituted of, for example, a hard disk or another recording medium. For example, a light intensity DB (database) for determining morphology of fracture from light intensity may be provided. In addition, the storage means 80 may store the image 61 captured by the image capturing unit or a visible light image and may store a result of a calculation by the calculating unit 73. Note that the image 61 need not be stored when the image 61 is to be measured in real time. Furthermore, the storage means 80 may store the various kinds of programs described above or a program for executing an interfacial fracture rate measurement method.

The control unit 74 controls at least each of the units that constitute the image processing means 70 and may further control capturing of images by the image capturing unit 60, control the light source unit 50, and the like. In a similar manner to the calculating unit 73, the control unit 74 is constituted of a CPU, various kinds of programs that are interpreted and executed on the CPU, and an internal memory such as a RAM for storing programs and various kinds of data.

An interfacial fracture rate measurement apparatus according to the present disclosure is an apparatus that specifies an interfacial fracture rate on an adhesive fracture surface and the interfacial fracture rate measurement apparatus includes: a light source unit configured to irradiate an adhesive fracture surface with light; an image capturing unit configured to capture an image of adhesive residue on the adhesive fracture surface; and image processing means for determining a site of an interfacial fracture from a captured image and calculating an area ratio of the site. By processing images with the image processing means, the interfacial fracture rate measurement apparatus according to the present disclosure eliminates variability in determinations between observers and improves calculation accuracy of interfacial fracture rates. Hereinafter, embodiments will be specifically described.

### (First Embodiment)

A configuration of an interfacial fracture rate measurement apparatus according to a first embodiment will be described with reference to Fig. 11. An interfacial fracture rate measurement apparatus 100 according to the first embodiment includes: a UV light source unit 52 configured to irradiate the adhesive fracture surface 40 with UV light 53; the image capturing unit 60 configured to capture fluorescence 42 emitted from the adhesive residue 31 on the adhesive fracture surface 40; and the image processing means 70 for determining a site of an interfacial fracture from the captured image 61 and calculating an area ratio of the site.

The interfacial fracture rate measurement apparatus according to the first embodiment focuses on the fact that many adhesives contain components that emit fluorescence and specifies an interfacial fracture site based on a correlation between a thickness of adhesive residue and fluorescence intensity. Specifically, fluorescence of the adhesive fracture surface is captured, a light intensity (fluorescence intensity) at each pixel of an obtained image is analyzed, the morphology of fracture at a location of the fracture surface corresponding to the pixel is specified according to the light intensity, an area ratio of at least a site of an interface fracture is calculated and, preferably, area ratios of a site of a thin-layer cohesive fracture and a site of a cohesive fracture are further calculated.

The UV (ultraviolet) light source unit 52 need only include at least a light source that emits UV light. Examples of the light source include a UV lamp and a UV-LED. While the UV light source unit 52 may be solely constituted of a UV light source, the UV light source unit 52 preferably includes a high-pass filter that cuts visible light on an optical path between the UV light source and the adhesive fracture surface in order to improve measurement accuracy. There may be one UV light source unit 52 or a plurality of UV light source units 52 may be provided depending on a shape of the adhesive fracture surface and the like.

In addition, when capturing a visible light image of an adhesive fracture surface, a visible light source unit (not illustrated) may be further provided. The visible light source is not particularly limited and a known light source such as an LED or a fluorescent lamp can be used.

The image capturing unit 60 need only include at least a camera that captures fluorescence of an adhesive fracture surface. As the camera, a digital camera is preferable due to ease of import to the image processing means. In addition, when only fluorescence is to be captured, a monochrome camera is preferable. On the other hand, when a visible light image of the adhesive fracture surface is to be captured, a color digital camera is preferable. While the image capturing unit 60 may be solely constituted of a camera, the image capturing unit 60 preferably includes a low-pass filter that cuts UV light on an optical path between the adhesive fracture surface and the camera in order to improve measurement accuracy.

The image processing means 70 is as described earlier.

Next, an interfacial fracture rate measurement method will be described with reference to Fig. 7. Fig. 7 is a flowchart showing an example of an interfacial fracture rate measurement method according to the first embodiment. The interfacial fracture rate measurement method according to the present embodiment includes at least the steps of: preparing an article having an adhesive fracture surface to be measured (S10); capturing fluorescence of the adhesive fracture surface (S20); and calculating an area ratio of an interfacial fracture from an obtained image (S30).

First, in a preparation step (S10), an article having an adhesive fracture surface to be measured is prepared. For example, when the article is a sample to be used for a quality control test of a product or a test for improvement of an adhered part of the product, after manufacturing an article including an adhered part with a layer configuration of the first adherend 10, the adhesion layer 30, and the second adherend 20 as shown in the example in Fig. 1, an adhesive fracture surface is prepared by peeling by a predetermined method. For example, the predetermined method may be in accordance with various peel test methods specified in JIS or may be any method determined by a tester. In addition, an adhered part of a product in use may deteriorate over time or under specific environmental conditions and cause the product to peel. In this case, the peeled product is prepared as a sample. Masking may be applied to a peripheral edge of the adhesive fracture surface to be measured. Masking enables a range of an image to be readily specified. Preferably, masking is appropriately selected and used from materials that do not emit fluorescence.

Next, the sample described above is fixed and irradiated with UV light to capture fluorescence (S20). In terms of stability of fluorescence intensity, a sample temperature when capturing an image is preferably constant. Examples of the temperature include methods such as keeping a sample holder at a constant temperature or controlling an environmental temperature so as to be constant. When an adhesive fracture surface of the sample is large, images may be captured continuously or intermittently by moving the image capturing unit 60 or the sample holder. In this case, the images are to be composited by the image processing means 70. Usually, measurements are preferably taken in the dark.

Next, the area ratio calculation step (S30) will be described with reference to Fig. 8. Note that an example shown in Fig. 8 is a method of determining a site of an interfacial fracture, a site of a thin-layer cohesive fracture, and a site of a cohesive fracture, respectively. In the example shown in Fig. 8, first, a light intensity In at a pixel n in an image is referred to (S31). The pixel in this case is a smallest image unit in an image obtained as digital data. Next, the light intensity In is compared with a predetermined value A (S32). When the light intensity In is less than the predetermined value A, a fracture state of a site corresponding to the pixel n on the adhesive fracture surface is determined to be an interfacial fracture. When the light intensity In is equal to or more than the predetermined value A, the light intensity In is further compared with another predetermined value B (S33). When the light intensity In is less than the predetermined value B, the fracture state of the site corresponding to the pixel n on the adhesive fracture surface is determined to be a thin-layer cohesive fracture. When the light intensity In is equal to or more than the predetermined value B, the fracture state of the site corresponding to the pixel n on the adhesive fracture surface is determined to be a cohesive fracture. These steps are performed with respect to all pixels, an area (number of pixels) of an interfacial fracture, an area (number of pixels) of a thin-layer cohesive fracture, and an area (number of pixels) of a cohesive fracture are respectively calculated, and area ratios are calculated from these values to obtain an interfacial fracture rate.

The predetermined value A and the predetermined value B are preferably set in advance. The predetermined value A is a threshold between an interfacial fracture and a thin-layer cohesive fracture. The predetermined value A may be determined from a fluorescence intensity obtained by preparing the first adherend 10 or the second adherend 20 of a sample and performing a similar measurement to the present interfacial fracture rate measurement method with respect to a surface of the adherend.

In addition, the predetermined value B is a threshold between a thin-layer cohesive fracture and a cohesive fracture. At present, there is no quantitative definition of a thin-layer cohesive fracture and a thin-layer cohesive fracture may be appropriately set according to the purpose of an application or the like of the sample, a thickness of the adhesion layer 30, or the like. For example, a thin-layer cohesive fracture may be determined when a thickness of the adhesive residue is equal to or less than 1 µm or a thin-layer cohesive fracture may be determined when the thickness of the adhesive residue is equal to or less than one-tenth of the thickness of the original adhesion layer 30.

In a case where the thickness of adhesive residue is equal to or less than 1 µm is defined as a thin-layer cohesive fracture, a sample for determining the predetermined value B may be prepared by applying an adhesive to the first adherend 10 to be 1 µm and curing the adhesive as necessary and a determination may be made from a fluorescence intensity obtained by performing a similar measurement to the present interfacial fracture rate measurement method with respect to the sample.

Fig. 9 shows an example of performing image processing on an image of an adhesive fracture surface using the interfacial fracture rate measurement apparatus and the interfacial fracture rate measurement method according to the first embodiment. In addition, Fig. 10 shows a visible light image of a same adhesive fracture surface as in Fig. 9. The example shown in Fig. 9 represents an image of the adhesive fracture surface having been divided into the interfacial fracture 32, the thin-layer cohesive fracture 34, and the cohesive fracture 33 according to S30 described above. For example, it is difficult to distinguish between the interfacial fracture 32 and the thin-layer cohesive fracture 34 in visible light within an area enclosed by a dotted line in Fig. 10. In contrast, in corresponding locations in Fig. 9, the distinction between the interfacial fracture 32 and the thin-layer cohesive fracture 34 has been made clear by the interfacial fracture rate measurement method according to the first embodiment.

In this manner, with the interfacial fracture rate measurement apparatus and the interfacial fracture rate measurement method according to the first embodiment, an interfacial fracture, a thin-layer cohesive fracture, and a cohesive fracture can be measured with high accuracy.

While the interfacial fracture rate measurement apparatus and the interfacial fracture rate measurement method according to the first embodiment have been described above, the present invention is not limited to the first embodiment described above. Modified examples of the first embodiment will now be described. Note that a combination of two or more modified examples may be applied to the first embodiment.

### [First modified example]

As shown in Figs. 2 to 4, an adhesive fracture surface formed by peeling of an adhered part is formed by a set of two surfaces: a first adhesive fracture surface on a side of the first adherend 10 and a second adhesive fracture surface on a side of the second adherend 20 opposite to the first adhesive fracture surface. From a perspective of improving accuracy of specifying morphology of a fracture surface, it is preferable to respectively capture fluorescence of the first adhesive fracture surface and fluorescence of the opposing second adhesive fracture surface instead of only capturing an image of one adhesive fracture surface and to subject each captured fluorescence to image processing. In particular, measuring both surfaces enables a site of the second adhesive fracture surface that corresponds to a site where the first adhesive fracture surface was determined to be a cohesive fracture in the interfacial fracture rate measurement method according to the first embodiment to be specified as either a cohesive fracture or a thin-layer cohesive fracture. Accordingly, accuracies of a cohesive fracture rate and a thin-layer cohesive fracture rate are improved.

### [Second modified example]

When the first adherend or the second adherend is a fluorescent material, fluorescence is emitted not only from adhesive residue but also from the adherend when irradiated with UV light. In this case, fluorescence derived from the adherend is preferably separated based on a difference between a fluorescence spectrum of an adhesive and a fluorescence spectrum of the adherend. While the separation may be made by an optical system such as a filter or a prism when possible, a hyperspectral camera or a multispectral camera is preferably used as the camera of the image capturing unit 60. Using a hyperspectral camera or a multispectral camera to capture an image that includes wavelength information and adopting fluorescence intensity in a wavelength range that is less affected by adherend-derived fluorescence in the image processing means 70 enables highly accurate measurements to be made.

### [Third modified example]

A thin-layer cohesive fracture part may have low fluorescence intensity. In order to improve fluorescence sensitivity in such a thin-layer cohesive fracture part, lock-in processing, high-dynamic range processing, and the like may be performed.

Specifically, examples of lock-in processing include a method of creating a modulation signal by a computer, performing illuminance modulation of UV light at a predetermined modulation frequency corresponding to the signal, capturing the fluorescence continuously or intermittently for a predetermined time using the image capturing unit 60, performing lock-in processing using the predetermined modulation frequency of the modulation signal as a reference frequency in the image processing means 70, and determining a site of an interfacial fracture or the like based on a fluorescence intensity of an image subjected to the lock-in processing. According to this method, noise can be significantly reduced and fluorescence sensitivity improves. In addition, according to this method, fluorescence can be captured even when the present interfacial fracture rate measurement apparatus is used in a brightly lit area.

Specifically, examples of high-dynamic range processing include a method of using a UV light source that enables illuminance of UV light to be adjusted as the UV light source unit 52, capturing a plurality of images with the image capturing unit 60 under different conditions of UV illuminance, compositing the plurality of images in the image processing means 70 by high-dynamic range processing, and determining a site of an interfacial fracture based on a fluorescence intensity of an image obtained by the high-dynamic range processing. According to this method, a measurement range of fluorescence intensity can be expanded and, for example, a thin-layer cohesive fracture part can be detected with high accuracy even when an adhesive contains components with high fluorescence intensity or when an adhesive layer is thick.

### [Fourth modified example]

When the first adherend or the second adherend has fine irregular shapes or the like, a scanning-type apparatus may be used. Specifically, examples include a method of configuring the UV light source unit 52 so as to include a first optical fiber that emits UV light and configuring the image capturing unit 60 so as to include a second optical fiber to which fluorescence is incident, and operating the first optical fiber and the second optical fiber to capture fluorescence emitted from the adhesive residue on the adhesive fracture surface. Using a scanning-type apparatus also improves determination accuracy of a fine fractured state of an adhesive fracture surface.

### [Fifth modified example]

In addition, an interfacial fracture rate measurement apparatus including a confocal optical system may also be used to acquire fine irregular shapes of the first adherend or the second adherend. Specific configurations of the confocal optical system include a configuration in which a light source with high directionality such as a laser diode is preferably used as the UV light source unit 52 and an objective lens is provided on an optical path from the UV light source unit 52 to the adhesive fracture surface and, more specifically, examples include a method of using an optical system similar to known confocal microscopes.

### [Sixth modified example]

When the first adherend and the second adherend have a three-dimensional shape such as a curved surface, an image capturing unit including a three-dimensional camera is preferably used as the image capturing unit 60. Examples of the three-dimensional camera include a stereo system, a ToF system, and a structured illumination system.

### [Seventh modified example]

The present interfacial fracture rate measurement apparatus and the interfacial fracture rate measurement method require that an adhesive contain a material that emits fluorescence. While many adhesive components emit fluorescence, for example, some urethane-based adhesives do not. In this case, a small amount of a fluorescent substance can be added to the urethane-based adhesive being an adhesive component to create an adhesive that is applicable to the present apparatus. If a small amount of the fluorescent substance is used, the adhesive composition can be made to emit fluorescence without interfering with the performance of the adhesive.

### (Second embodiment)

Next, a configuration of an interfacial fracture rate measurement apparatus according to a second embodiment will be described with reference to Fig. 12. Fig. 12 is a schematic view showing an example of an interfacial fracture rate measurement apparatus 200 according to the second embodiment. The interfacial fracture rate measurement apparatus 200 according to the second embodiment includes: a polarized light source unit 54 configured to irradiate an adhesive fracture surface 40 with polarized light 55; an image capturing unit 63 configured to capture transmitted light 43 that is transmitted through adhesive residue 31 on the adhesive fracture surface 40; and image processing means 70. The image capturing unit 63 includes a polarizing plate 82 on an optical path of the transmitted light 43.

The interfacial fracture rate measurement apparatus according to the second embodiment has been completed with a focus on the fact that polymeric materials that make up adhesives often have birefringent characteristics and in consideration of a correlation observed between a thickness of adhesive residue and polarization characteristics of transmitted light. Specifically, transmitted light that is transmitted through an adhesive fracture surface is captured, a light intensity at each pixel of an obtained image is analyzed, the morphology of fracture at a location of the fracture surface corresponding to the pixel is specified according to the light intensity, an area ratio of at least a site of an interface fracture is calculated and, preferably, area ratios of a site of a thin-layer cohesive fracture and a site of a cohesive fracture are further calculated.

The polarized light source unit 54 need only be configured to be capable of irradiating the adhesive fracture surface 40 with polarized light. For example, a configuration solely made of a polarized light source such as a polarized laser may be adopted or a combination of a non-polarized light source and a polarizing plate or a non-polarized light source and a polarization modulator may be adopted. The non-polarized light source is not particularly limited and a known light source such as an LED or a fluorescent lamp can be used. The polarizing plate and the polarization modulator are provided on an optical path between the light source and the adhesive fracture surface.

In addition, when capturing a visible light image (non-polarized light) of the adhesive fracture surface, a visible light source unit (not illustrated) may be further provided.

As a camera 62 of the image capturing unit 63, a digital camera is preferable due to ease of import to the image processing means. Examples of the polarizing plate 82 include a quarter-wave plate. An arrangement of the image capturing unit 63 is appropriately adjusted according to a substance of the adherend 10 or the like. For example, when the adherend 10 is a highly light-reflective material such as metal, the image capturing unit 63 is arranged so as to capture the transmitted light 43 having been reflected by the interface 11 as shown in the example in Fig. 11. In addition, when the adherend 10 has low transmittivity as in the case of a transparent film, the image capturing unit 63 is arranged so as to capture the transmitted light 43 having been transmitted through the adhesive residue 31 and the adherend 10 (not illustrated).

Next, an interfacial fracture rate measurement method according to the second embodiment will be described. The preparation step (S10) and the image capturing step (S20) are as described in the first embodiment. However, UV light shall be read as polarized light and fluorescence shall be read as transmitted light.

The area ratio calculation step (S30) will now be described. First, a relationship between light intensity of an image and a thickness of the adhesive residue 31 will be described with reference to Fig. 13. In Fig. 13, a direction in which light travels is an X axis and a plane perpendicular to the X axis is a YZ plane. In addition, in the example shown in Fig. 13, the polarized light 55 is linearly polarized light in the Z-axis direction. When the polarized light 55 is transmitted through the adhesive residue 31 having birefringent characteristics, the transmitted light 43 becomes elliptic polarized light. A major-axis direction of the elliptic polarized light depends on a thickness of the adhesive residue 31. Due to the transmitted light 43 being transmitted through the polarizing plate 82, for example, a Z-axis direction component of the transmitted light 43 is cut and light 83 corresponding to a Y-axis direction component is incident to the camera 62. In this manner, light intensity of light incident to the camera 62 changes according to the thickness of the adhesive residue 31. Note that a correlation between the thickness of the adhesive residue 31 and light intensity is not limited to a linear correlation.

A specific example of the area ratio calculation step (S30) will be described with reference to Fig. 14. Note that the example shown in Fig. 14 is a method of determining a site of an interfacial fracture, a site of a thin-layer cohesive fracture, and a site of a cohesive fracture, respectively, using a crossed Nicol method and the polarized light 55 and the polarizing plate 82 are not rotated. In the example shown in Fig. 14, first, a light intensity In at a pixel n in an image is referred to (S41). Next, the light intensity In is compared with a predetermined numerical range C (S42). When In is within the predetermined numerical range C, a fracture state of a site corresponding to the pixel n on the adhesive fracture surface is determined to be an interfacial fracture. When the light intensity In is outside of the predetermined numerical range C, the light intensity In is further compared with another predetermined numerical range D (S43). When In is within the predetermined numerical range D, the fracture state of the site corresponding to the pixel n on the adhesive fracture surface is determined to be a thin-layer cohesive fracture. When the light intensity In is outside of the predetermined numerical range D, the fracture state of the site corresponding to the pixel n on the adhesive fracture surface is determined to be a cohesive fracture. These steps are performed with respect to all pixels, an area (number of pixels) of an interfacial fracture, an area (number of pixels) of a thin-layer cohesive fracture, and an area (number of pixels) of a cohesive fracture are respectively calculated, and area ratios are calculated from these values to obtain an interfacial fracture rate.

The predetermined numerical ranges C and D described above are preferably set in advance. The predetermined numerical range C is a range of light intensity indicating an interfacial fracture and the predetermined numerical range D is a range of light intensity indicating a thin-layer cohesive fracture. Examples of a setting method include a method of preparing a same type of adhesive as an adhesive to be measured, forming coatings with a plurality of thicknesses, measuring the light intensity for each thickness by a method similar to that described above, and compiling a database. In addition, when birefringent characteristics of the adhesive are known, the relationship between thickness and light intensity may be calculated and stored in a database.

Another specific example of the area ratio calculation step (S30) will be described with reference to Fig. 15. In the example shown in Fig. 15, images are captured while rotating either the linearly polarized light 55 of the light source or the polarizing plate 82 described above at a predetermined speed. Accordingly, light intensity varies periodically.

A difference in thicknesses of the adhesive residue 31 can be obtained based on phase information at any points in a captured image and, accordingly, sites of an interfacial fracture, a thin-layer cohesive fracture, and a cohesive fracture are determined. Although Fig. 15 focuses on two points for the sake of clarity of explanation, a plurality of pieces of phase information can be obtained by using three or more points, making it easier to determine the sites of an interfacial fracture, a thin-layer cohesive fracture, and a cohesive fracture.

In this manner, with the interfacial fracture rate measurement apparatus and the interfacial fracture rate measurement method according to the second embodiment, an interfacial fracture, a thin-layer cohesive fracture, and a cohesive fracture can be measured with high accuracy.

Examples of a method of rotating the linearly polarized light 55 include using a combination of a non-polarized light source and a polarizing plate as the polarized light source unit 54 and rotating the polarizing plate.

In addition, lock-in processing may be performed using a frequency based on a rotation speed of the linearly polarized light 55 or the polarizing plate 82 as a reference frequency and a site of an interfacial fracture may be determined based on a phase difference in an image subjected to the lock-in processing. Performing the lock-in processing enables noise to be significantly reduced and improves accuracy of determination of sites of an interfacial fracture, a thin-layer cohesive fracture, and a cohesive fracture.

While the interfacial fracture rate measurement apparatus and the interfacial fracture rate measurement method according to the second embodiment have been described above, the present invention is not limited to the second embodiment described above. Modified examples of the second embodiment include the first modified example and the third to sixth modified examples described above in the first embodiment. Note that a combination of two or more of the modified examples may be applied to the second embodiment.

The embodiments and modified examples thereof described above have been exemplified for the purpose of illustrating the technical contents of the present invention and are not intended to limit the technical scope of the invention pertaining to the present application to the contents of the description. The technical scope of the invention pertaining to the present application includes changes, substitutions, additions, and omissions insofar as they are conceivable for a person skilled in the art in the specification, the drawings, and the claims or equivalents thereof.

The present application claims priority on the basis of Japanese Patent Application No. 2022-120200 filed on July 28, 2022, the entire contents of which are incorporated herein by reference.

### Reference Signs List

- 10: FIRST ADHEREND
- 11: INTERFACE
- 20: SECOND ADHEREND
- 21: INTERFACE
- 30: ADHESION LAYER
- 31: ADHESIVE RESIDUE
- 32: INTERFACIAL FRACTURE
- 33: COHESIVE FRACTURE
- 34: THIN-LAYER COHESIVE FRACTURE
- 40: ADHESIVE FRACTURE SURFACE
- 41: LIGHT
- 42: FLUORESCENCE
- 43: TRANSMITTED LIGHT
- 50: LIGHT SOURCE UNIT
- 51: LIGHT
- 52: UV LIGHT SOURCE UNIT
- 53: UV LIGHT
- 54: POLARIZED LIGHT SOURCE UNIT
- 55: POLARIZED LIGHT
- 60: IMAGE CAPTURING UNIT
- 61: IMAGE
- 62: CAMERA
- 63: IMAGE CAPTURING UNIT
- 70: IMAGE PROCESSING MEANS
- 71: INPUT UNIT
- 72: OUTPUT UNIT
- 73: CALCULATING UNIT
- 74: CONTROL UNIT
- 80: STORAGE MEANS
- 82: POLARIZING PLATE
- 83: LIGHT
- 100, 200, 300: INTERFACIAL FRACTURE RATE MEASUREMENT APPARATUS

## Claims

1. An interfacial fracture rate measurement apparatus, comprising:
a light source unit configured to irradiate an adhesive fracture surface with light;
an image capturing unit configured to capture an image of adhesive residue on the adhesive fracture surface; and
image processing means for determining a site of an interfacial fracture from a captured image and calculating an area ratio of the site.

2. The interfacial fracture rate measurement apparatus according to claim 1, wherein
the light source unit is a UV light source unit, and
the image capturing unit is configured to capture fluorescence emitted by the adhesive residue.

3. The interfacial fracture rate measurement apparatus according to claim 1, wherein
the light source unit is a polarized light source unit, and
the image capturing unit includes a polarizing plate and is configured to capture transmitted light that is transmitted through the adhesive residue.

4. The interfacial fracture rate measurement apparatus according to claim 1, further comprising storage means for storing a captured image.

5. The interfacial fracture rate measurement apparatus according to claim 4, further comprising a visible light source unit configured to irradiate the adhesive fracture surface with visible light, wherein the storage means is configured to store a visible light image of the adhesive fracture surface.

6. The interfacial fracture rate measurement apparatus according to claim 1, wherein
the image processing means is configured to determine a site of an interfacial fracture based on light intensity of the image.

7. The interfacial fracture rate measurement apparatus according to claim 1, wherein
the image processing means is configured to determine sites of an interfacial fracture, a thin-layer cohesive fracture, and a cohesive fracture, respectively, based on light intensity of the image.

8. The interfacial fracture rate measurement apparatus according to claim 2, wherein the image capturing unit includes a hyperspectral camera or a multispectral camera.

9. The interfacial fracture rate measurement apparatus according to claim 2, wherein
the UV light source unit is configured to be capable of illuminance modulation of UV light at a predetermined modulation frequency,
the image capturing unit is configured to capture the fluorescence continuously or intermittently for a predetermined time, and
the image processing means is configured to perform lock-in processing using the predetermined modulation frequency as a reference frequency and
determine a site of an interfacial fracture based on light intensity of an image subjected to the lock-in processing.

10. The interfacial fracture rate measurement apparatus according to claim 2, wherein
the UV light source unit is configured to be capable of illuminance adjustment of UV light,
the image capturing unit is configured to capture a plurality of images under different conditions of UV illuminance, and
the image processing means is configured to composite the plurality of images by high-dynamic range processing and
determine a site of an interfacial fracture based on light intensity of an image obtained by the high-dynamic range processing.

11. The interfacial fracture rate measurement apparatus according to claim 1, wherein
the light source unit includes a first optical fiber that emits light,
the image capturing unit includes a second optical fiber to which light is incident, and
an image of the adhesive residue is captured by scanning with the first optical fiber and the second optical fiber.

12. The interfacial fracture rate measurement apparatus according to claim 2, wherein
an objective lens is provided on an optical path from the UV light source unit to the adhesive fracture surface, and
the fluorescence is captured via a confocal optical system.

13. The interfacial fracture rate measurement apparatus according to claim 1, wherein the image capturing unit includes a three-dimensional camera.

14. The interfacial fracture rate measurement apparatus according to claim 13, wherein the three-dimensional camera is a stereo system, a ToF system, and a structured illumination system.

15. The interfacial fracture rate measurement apparatus according to claim 3, wherein
the image capturing unit is configured to capture the transmitted light, and
the image processing means is configured to determine a site of an interfacial fracture based on light intensity of a captured image.

16. The interfacial fracture rate measurement apparatus according to claim 3, wherein
the polarized light source unit is configured to be capable of emitting linearly polarized light while rotating the linearly polarized light or
the polarizing plate is configured to be rotatable,
the image capturing unit is configured to capture the transmitted light continuously or intermittently for a predetermined time while rotating either the linearly polarized light or the polarizing plate, and
the image processing means is configured to determine sites of an interfacial fracture, a thin-layer cohesive fracture, and a cohesive fracture based on phase information of any points in a captured image.

17. The interfacial fracture rate measurement apparatus according to claim 16, wherein
the image processing means is configured to perform lock-in processing using a frequency based on a rotational speed of the linearly polarized light or the polarizing plate as a reference frequency and
determine a site of an interfacial fracture based on a phase difference of an image subjected to the lock-in processing.

18. An interfacial fracture rate measurement method, comprising the steps of:
irradiating an adhesive fracture surface with UV light or polarized light;
capturing fluorescence emitted by adhesive residue on the adhesive fracture surface or transmitted light that is transmitted through the adhesive residue; and
determining a site of an interfacial fracture from an obtained image and calculating an area ratio of the site.

19. The interfacial fracture rate measurement method according to claim 18, wherein
images of a first adhesive fracture surface and a second adhesive fracture surface opposing the first adhesive fracture surface are respectively captured.

20. The interfacial fracture rate measurement method according to claim 18, wherein masking is applied to a peripheral edge of the adhesive fracture surface.

21. The interfacial fracture rate measurement method according to claim 18, wherein when an adhesive component does not emit fluorescence, an adhesive composition obtained by adding a fluorescent substance to the adhesive component is used as an adhesive.
